# EUROPÄISCHE PATENTSCHRIFT

(11) **EP 2 168 530 B1**
(45) Veröffentlichungstag und Bekanntmachung des Hinweises auf die Patenterteilung: **06.06.2012**
(21) Anmeldenummer: 09012145.0
(22) Anmeldetag: 24.09.2009
(51) Int. Cl.: A61C 8/00

(54) **Keramisches Implantat**
Ceramic implant
Implant en céramique

(30) Priorität: 27.09.2008 DE 102008049388; 03.11.2008 DE 102008055645
(43) Veröffentlichungstag der Anmeldung: 31.03.2010
(73) Patentinhaber: Kötter-Jelitte, Kerstin, 58089 Hagen (DE); Jelitte, Gerd, 58093 Hagen (DE)
(72) Erfinder: Kötter-Jelitte, Kerstin, 58089 Hagen (DE); Jelitte, Gerd, 58093 Hagen (DE)
(74) Vertreter: Kötter, Ulrich

(56) Entgegenhaltungen:
- EP-A1- 1 371 342
- EP-A1- 1 570 804
- CH-A5- 696 625
- DE-A1- 10 340 059
- DE-A1-102007 013 603
- DE-U1- 29 606 593
- US-A- 5 205 745
- US-B1- 6 447 295

## Beschreibung

Die Erfindung betrifft ein keramisches Implantat nach dem Oberbegriff des Patentanspruchs 1. Die Erfindung betrifft weiterhin eine keramische Schraube nach dem Oberbegriff des Patentanspruchs 3. Die Erfindung betrifft darüber - hinaus ein Verfahren zur Herstellung eines keramischen Implantats nach dem Oberbegriff des Patentanspruchs 9.

In der zahnmedizinischen Prothetik werden bereits seit langem Implantate zur dauerhaften Befestigung eines prothetischen Aufbaus an einem Kiefer eingesetzt. Das Zahnimplantat übernimmt dabei die Aufgabe einer Zahnwurzel, welche direkt in den Kieferknochen eingebracht wird. Implantate werden heute regelmäßig aus Titan hergestellt, sind zweiteilig aufgebaut und umfassen einen im Wesentlichen zylindrischen Grundkörper, der mit einem Außengewinde zum Einschrauben in den Kiefer versehen ist und eine zentrale Gewindebohrung zur Aufnahme eines Gewindebolzens aufweist, mittels dessen ein Implantatpfosten, in Fachkreisen als "Abutment" bezeichnet, befestigt wird. Eine derartige zweiteilige Ausbildung hat den Vorteil, dass das Abutment nach dem Einheilen des Implantatkörpers in dem Kiefer außerhalb des Körpers bearbeitet werden kann bzw. je nach Lage des Implantatkörpers im Kiefer ein gegebenenfalls abgewinkeltes Abutment ausgewählt werden kann. Ein weiterer Vorteil eines zweiteiligen Implantats besteht darin, dass im Gegensatz zu einteiligen Implantaten, welche immer offen einheilen müssen, eine verdeckte Einheilphase ermöglicht ist. Nachteilig an den bekannten Titanimplantaten ist, dass diese oftmals unter einer Krone oder Brücke silbrig hervorschimmern, insbesondere, wenn sich das Zahnfleisch zurückbildet. Dieser Effekt wird als ästhetisch störend empfunden.

Vereinzelt werden Implantate aus einem keramischen Material, insbesondere aus Zirkoniumkeramik eingesetzt. Zirkoniumimplantate weisen den Vorteil auf, dass ihre farbliche Erscheinung der natürlichen Zahnfarbe sehr nahe kommt. Derartige Zirkoniumimplantate sind jedoch derzeit nur einteilig realisiert. Dies liegt darin begründet, dass auf Grund der mangelnden Elastizität des Keramikmaterials eine zuverlässige Schraubverbindung äußerst problematisch ist. Es hat sich gezeigt, dass insbesondere bei mehrfachem Einschrauben einer metallischen Schraube in eine in ein Zirkonimplantat eingebrachte Gewindebohrung eine nur unzureichende Verbindung von Abutment und Implantat erzielt werden konnte. Die Verwendung einer Schraube aus keramischem Material erwies sich als unmöglich.

Dokument EP1570804 offenbart beispielweise ein Schrauben implantat mit einem vorgesinterten keramischen Teil und einem metallischen Teil die durch Sinterung verbunden werden.

Vor diesem Hintergrund stellt sich die Aufgabe, ein keramisches Implantat, insbesondere ein Zirkonimplantat zu entwickeln, welches eine zuverlässige Schraubverbindung zwischen Implantat und Abutment zulässt, nach Möglichkeit mittels Verwendung einer keramischen Schraube, da dieses den ästhetischen Gesamteindruck weiter verbessert. Im Rahmen der vorliegenden Erfindung wird diese Aufgabe dadurch gelöst, dass innerhalb der Bohrung des keramischen Implantats zumindest partiell eine Materialschicht aus Edelmetall angeordnet ist, die mit einem Innengewinde versehen ist. Ein solches Gewinde weist die erforderlichen elastischen Eigenschaften auf, welche für ein Anziehen einer Schraube und somit die für eine zuverlässige Verbindung erforderliche Haltespannung gewährleisten kann. Bevorzugt wird als Keramikwerkstoff eine Hochleistungskeramik, insbesondere auf Basis von Zirkonoxid (ZrO) oder Zirkondioxid (ZrO₂) eingesetzt. Der Begriff "Bohrung" umfasst im Folgenden auch einer Bohrung entsprechende Hohlräume, welche beispielsweise durch Gießen in einer Form hergestellt wurden.

Erfindungsgemäß erfolgt die Verbindung einer metallischen Materialschicht mit der Keramik des Implantats durch ein Low-Temperature-Corefive Verfahren welches eine Verbindung der Gefüge der unterschiedlichen Materialien ermöglicht.

Überraschenderweise hat sich gezeigt, dass das im Bereich der Herstellung von Leiterplatten in neuster Zeit bekannt gewordene Low-Temperature-Cofire-Verfahren auch für die Aufbringung der im vorliegenden Fall erforderlichen Schichtdicke einsetzbar ist. In diesem Verfahren wird das Metall in den Grünkörper eines Implantatkörpers eingebracht und zusammen mit diesem gebrannt. Dabei wird eine glasartige Verbindungsschicht erzeugt, so dass die Metallschicht dauerhaft in der Bohrung des Implantats integriert ist. In diese Metallschicht lässt sich nun mit einfachen Mitteln ein gewünschtes Gewinde einbringen. Durch das Low-Temperature-Cofire-Verfahren kann ein chemischer Verbund zwischen einem Zirkonoxid und einer Goldlegierung hergestellt werden, der sich als äußerst harte, glasartige Schicht darstellt. Die so innerhalb des Implantats gebildete Goldschicht ist von außen nicht sichtbar und kommt nicht mit dem Knochen und der Gingiva in Berührung.

Zur Erzielung einer hohen Festigkeit wäre es wünschenswert, eine selbstschneidende Schraube einzusetzen, welche sich in das Metall einschneidet. Nachteilig hieran ist jedoch, dass bei den bei zweiteiligen Implantatsystemen erforderlichen mehrfachen Einschraubvorgängen ein so geschnittenes Gewinde ausgeweitet werden kann, wodurch die Haltbarkeit der Schraube beeinträchtigt wird. Um diesem entgegen zu wirken, kann bevorzugt ein weiteres Gewinde angeordnet sein, was unterhalb des ersten Gewindes angeordnet ist und einen geringeren Innendurchmesser als das Erste aufweist. Dabei könnte bei den erforderlichen mehrfachen Schraubvorgängen eine kürzere Schraube Verwendung finden, welche nur das obere Gewinde nutzt. Erst bei der endgültigen Befestigung des Abutments in dem Implantatkörper kommt eine längere Schraube zum Einsatz, welche sich in das Gewinde mit geringerem Durchmesser einschneiden kann. Dabei ist es nicht unbedingt erforderlich, das in diesem durchmesserverengten Bereich überhaupt ein Gewinde vorgesehen ist, da dieses vollständig durch das selbstschneidende Gewinde der Schraube erzeugt werden kann.

Ein solches erfindungsgemäßes Implantat mit der vorgenannten eingebrachten Materialschicht, die mit einem Innengewinde versehen ist, ermöglicht es sogar, die Schraubverbindung über eine keramische Schraube, insbesondere eine Zirkondioxidkeramikschraube zu realisieren. Eine optimale Haltespannung der Schraubverbindung lässt sich erzielen, wenn die keramische Schraube an ihrem Zapfen ebenfalls mit einer Edelmetallschicht versehen ist, in die dann das Gewinde eingebracht ist. Die Beschichtung der Schraube mit einem Edelmetall ist dabei ebenfalls in vorgenannter Art und Weise mittels Low-Temperature-Cofire-Verfahren aufgebracht worden. Eine Schraubverbindung aus einer Goldlegierung bietet bekanntermaßen enorme Vorteile hinsichtlich der Selbstsicherung.

Um das Eindringen von Bakterien in den Implantatkörper zu verhindern, kann das Implantat an seiner dem Abutment zugewandten Seite umlaufend mit einer zusätzlichen Beschichtung aus Metall oder Kunststoff versehen sein. Das Abutment sollte einen umlaufenden Steg aufweisen, der mit der vorgenannten Beschichtung korrespondiert und der so gestaltet ist, dass beim Anziehen der Befestigungsschraube dieser Steg in die Beschichtung eindringt, so dass eine Abdichtung erzielbar ist. Der Steg kann dabei innerhalb eines bei dem Abutment vorgesehenen Innenkonus angeordnet sein, so dass dieser Innenkonus im montierten Zustand des Abutments die Beschichtung des Implantatkörpers vollständig verdeckt. Mit Hilfe eines solchen Innenkonus kann darüber hinaus eine zusätzliche Abschottung des Implantats gegenüber Keimen von außen entgegengewirkt werden.

Bei der Herstellung der Metallschichten, welche vorzugsweise aus Gold bestehen, sind zur Einbringung bzw. Auftragung des Metalls unterschiedliche Möglichkeiten gegeben. Zum Einen lässt sich das Metall in Form von Folien in bzw. auf den Implantatkörper bzw. die Schraube aufbringen. Zum Anderen kann - bevorzugt - auch eine Edelmetallpaste zum Einsatz kommen. Zur Herstellung der mit einem Innengewinde versehenen Beschichtung der Bohrung des Implantatkörpers, der zunächst in Form eines Grünkörpers vorliegt, wird dieser mit einem Metall, vorzugsweise einer Goldlegierung aufgefüllt und nachfolgend wird der Grünkörper mit dem Metall zusammen gebrannt. In den hierdurch erzielten "Metallpfropfen" lässt sich auf einfache Art und Weise die gewünschte Gewindebohrung sowie gegebenenfalls gewünschte weitere Konturen einbringen. Unter dem Begriff "Gold" sind vorliegend Goldlegierungen zu verstehen, wie sie in der zahnmedizinischen Prothetik Verwendung finden. Geeignete Legierungsbestandteile sind beispielsweise Silber, Kupfer, Platin, Palladium und/oder Zink, wobei besonders Silber, Kupfer, Platin und Palladium gute antibakterielle Eigenschaften aufweisen.

Weitere mögliche Ausbildungen der Erfindung finden sich in den Unteransprüchen. Eine beispielhafte Ausformung der Erfindung ist in den begleitenden Zeichnungen dargestellt. Dabei zeigen:
- Fig. 1: eine schematische Ansicht eines Keramikimplantats;
- Fig. 2: eine schematische Ansicht eines Keramikabutments und
- Fig. 3: eine schematische Ansicht einer keramischen Schraube.

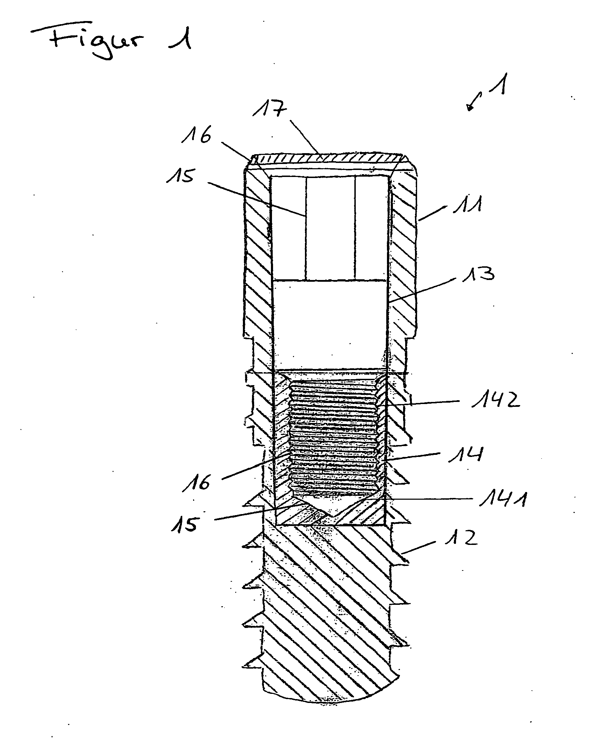

Das als Ausführungsbeispiel gewählte Implantatsystem umfasst ein Implantat 1 und ein Abutment 2, welches mit einer Schraube 3 mit dem Implantat 1 verbunden ist. Das Implantat 1 gemäß Figur 1 ist aus Zirkondioxid-basierender Keramik hergestellt und umfasst einen Implantatkörper 11 mit einer im Wesentlichen zylindrischen Geometrie. An seinem dem Kiefer zugewandten Ende ist der Implantatkörper 11 mit einem Außengewinde 12 versehen. Zentrisch ist in den Implantatkörper 11 eine Bohrung 13 eingebracht, welche etwa hälftig umlaufend mit einer Goldschicht 14 versehen ist. Die Goldschicht 14 ist mittels eines Low-Temperature-Cofire-Verfahrens mit der Keramik des Implantatkörpers 11 verbunden und über eine - nicht dargestellte - glasartige Verbindungsschicht mit der Zirkonoxid-Keramik dauerhaft verbunden. In die Goldschicht 14 ist eine Sackbohrung 141 eingebracht, die mit einem Innengewinde 142 versehen ist. An seinem offenen, oberen Ende ist der Implantatkörper 11 umlaufend mit einer Phase 16 versehen, auf die eine Goldschicht 17 aufgebracht ist. In die Bohrung 13 ist an ihrer der Phase 16 zugewandten Seite umlaufend eine Verdrehsicherung in Form eines in die Keramik des Implantatkörpers 11 eingeformten Innensechskants 15 versehen.

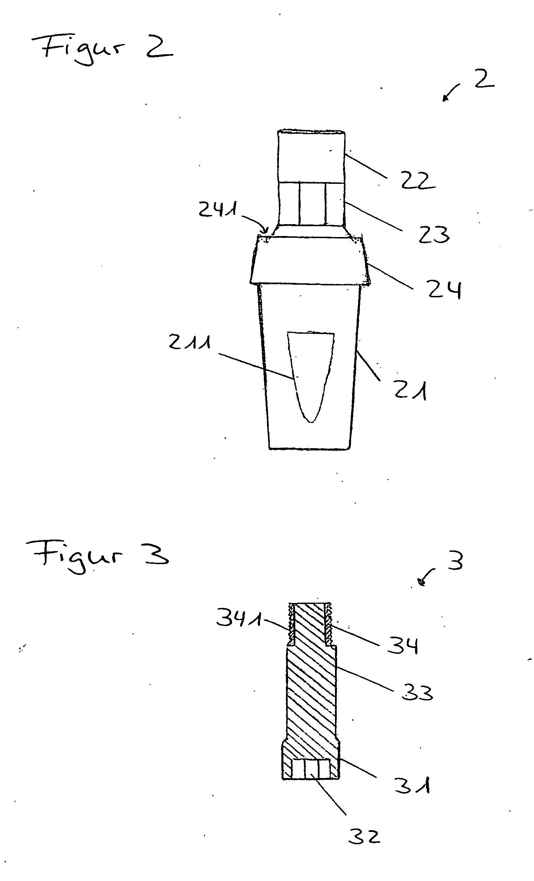

Das Abutment 2 ist in Figur 2 dargestellt und dient als Halterung eines - nicht dargestellten - prothetischen Aufbaus. Das Abutment 2 umfasst ein Pfostenteil 12, das über ein Kragenstück 24 mit einem Anschlussteil 22 verbunden ist. Das Pfostenteil 21 ist konisch ausgebildet und ist mit einer Öffnung 211 versehen, die den Durchgang einer Schraube 3 zur Befestigung des Abutments 2 an dem Implantat 1 dient. Hierzu ist das Abutment 2 entlang seiner Rotationsachse mit einer - nicht dargestellten - Durchgangsbohrung versehen. Das Kragenstück 24 ist konisch ausgebildet und weist an seiner dem Anschluss 22 zugewandten Seite einen Überhang auf, durch den ein Hinterschnitt 241 gebildet ist. Innerhalb des Hinterschnitts ist umlaufend ein - nicht dargestellter - Steg angeformt, derart, dass er im montierten Zustand auf der Goldschicht 17 der Phase 16 aufliegt. Weiterhin ist das Anschlussteil 22 an seiner dem Kragenstück 24 zugewandten Seite umlaufend als Sechskant 23 ausgebildet. Der Sechskant 23 ist derart geformt, dass er mit dem Innensechskant 15 des Implantatkörpers 11 korrespondiert. Das Abutment 2 ist im Ausführungsbeispiel aus Zirkondioxid-basierender Keramik hergestellt.

Die Schraube 3 ist ebenfalls aus einer Zirkondioxid-basierenden Keramik hergestellt und umfasst einen Schraubenkopf 31, an den ein Gewindezapfen 33 angeformt ist. Der Schraubenkopf 31 weist einen Innensechskant 32 zur Übertragung eines Drehmoments auf die Schraube 3 mittels eines entsprechenden Werkzeugs auf. Der Gewindezapfen 33 ist an seinem dem Schraubenkopf 31 entgegengesetzten Ende umlaufend mit einer Goldschicht 34 versehen, welche mittels Low-Temperature-Cofire-Verfahren mit der Keramikschraube 3 verbunden ist. In die Goldschicht 34 ist umlaufend ein Außengewinde 341 eingebracht

Zur Verbindung des Abutments 2 mit dem Implantat 1 wird das Anschlussteil 22 des Abutments 2 in die Bohrung 13 des Implantatkörpers 11 eingeführt, wobei der Außensechskant 23 des Anschlussteils 22 in den Innensechskant 15 des Implantatkörpers 11 eingreift. Anschließend wird die Schraube 3 durch die Öffnung 211 des Pfostenteils 21 des Abutments 2 eingeführt und durch das Abutment 2 in das Innengewinde 142 der Goldschicht 14 eingeschraubt. Dabei wird das Kragenstück 24 gegen die Phase 16 des Implantats 1 bewegt, derart, dass der innerhalb des Hinterschnitts 241 - nicht dargestellte - umlaufende Steg der Phase 16 eingepresst wird. Gleichzeitig wird die Goldschicht 17 durch das überstehende Kragenstück 24 verdeckt.

Bei der Herstellung des erfindungsgemäßen keramischen Implantats wird zunächst ein Implantatkörper als Grünkörper aus einem keramischen Material geformt und mit einer Sackbohrung versehen. Die Sackbohrung wird mit dem Edelmetall vorzugsweise in Form einer Cofire-Paste aufgefüllt und der so gefüllte Keramikkörper anschließend in einem Low-Temperature-Cofire-Verfahren gebrannt. Nachfolgend wird der so in der Bohrung integrierte Edelmetallpfropfen derart bearbeitet, dass zunächst eine Gewindebohrung eingebracht wird und gegebenenfalls anschließend weitere Formbearbeitungen der Edelmetallschicht vorgenommen werden. Die Aufbringung der Edelmetallschicht 17 auf die Phase 16 des Implantatkörpers 11 erfolgt im selben Zuge. Hierzu werden vor dem Brennvorgang auf die Phase 16 Goldfolien aufgebracht, welche dann gemeinsam mit dem Grünkörper gebrannt werden.

## Patentansprüche

1. Keramisches Implantat, insbesondere Zirkonimplantat, zum Einsatz in einen Kieferknochen, umfassend einen Implantatkörper (11) mit einer Sackbohrung (13) zur Aufnahme einer Schraube (3) zur Fixierung eines Abutments (2), wobei innerhalb der Bohrung (13) zumindest partiell eine Materialschicht (14) aus Metall angeordnet ist, die mit dem Implantatkörper (11) chemisch verbunden und mit einem Innengewinde (141) versehen ist, **dadurch gekennzeichnet, dass** die Materialschicht (14) aus einem Edelmetall besteht, welches mittels Low-Temperature-Cofire-Verfahren mit der Keramik über eine glasartige Verbindungsschicht verbunden ist, sodass eine Low-Temperature-Cofired Ceramic (LTCC) gebildet ist.

2. Implantat nach Anspruch 1, **dadurch gekennzeichnet, dass** der Implantatkörper (11) an seiner dem Abutment (2) zugewandten Seite zumindest teilweise eine Beschichtung (17) aus Metall oder Kunststoff aufweist.

3. Keramische Schraube, insbesondere Zirkonschraube, umfassend einen Schraubenkopf (31) mit einem an diesen angeformten Gewindezapfen (33), wobei der Gewindezapfen zumindest bereichsweise eine Beschichtung (34) aus Metall aufweist, die mit der Schraube chemisch verbunden und in die ein Gewinde (341) eingebracht ist, **dadurch gekennzeichnet, dass** die Materialschicht (34) aus einem Edelmetall besteht, welches mittels Low-Temperature-Cofire-Verfahren mit der Keramik über eine glasartige Verbindungsschicht verbunden ist, sodass eine Low-Temperature-Cofired Ceramic (LTCC) gebildet ist.

4. Zweiteiliges Implantatsystem, umfassend ein Implantat (1) nach einem der Ansprüche 1 und 2 sowie ein Abutment (2), das mittels einer Schraube (3) mit dem Implantat (1) verbunden ist.

5. Implantatsystem nach Anspruch 4, **dadurch gekennzeichnet, dass** das Abutment (2) aus keramischen Material hergestellt ist.

6. Implantatsystem nach Anspruch 5, **dadurch gekennzeichnet, dass** die Schraube (3) gemäß Anspruch 3 ausgebildet ist.

7. Implantatsystem nach einem der Ansprüche 4 bis 6, **dadurch gekennzeichnet, dass** der Implantatkörper (11) an seiner dem Abutment (2) zugewandten Seite umlaufend eine Beschichtung (17) aus Metall oder Kunststoff aufweist und dass das Abutment (2) an seiner dem Implantatkörper (11) zugewandten Seite einen umlaufenden Steg aufweist, derart, dass beim Anziehen der Schraube der Steg in die Beschichtung (17) eindringt, sodass eine Abdichtung erzielbar ist.

8. Implantatsystem nach Anspruch 7, **dadurch gekennzeichnet, dass** das Abutment (2) an seiner dem Implantatkörper zugewandten Seite einen Innenkonus (241) aufweist, welcher derart ausgebildet ist, dass die umlaufende Beschichtung (17) des Implantatkörpers (11) im montierten Zustand des Implantatsystems nicht sichtbar ist.

9. Verfahren zur Herstellung eines keramischen Implantats, wobei ein Implantatkörper (11) als Grünkörper aus einem keramischen Material geformt und mit einer Sackbohrung (13) versehen wird, wobei die Sackbohrung (13) mit einem Metall aufgefüllt wird, und **dadurch gekennzeichnet, dass** die Keramik in einem Low-Temperature-Cofire-Verfahren zusammen mit dem eingebrachten Metall gebrannt wird und nachfolgend nach dem Brennvorgang in den in der Bohrung (13) befindlichen Metallpfropfen eine Gewindebohrung (141, 142) eingebracht wird.

## Claims

1. Ceramic implant, in particular a zirconium implant, for insertion into a jaw bone, comprising an implant body (11) with a blind hole (13) to receive a screw (3) for fixing an abutment (2), where a material layer (14) of metal is arranged within at least part of the hole (13) which is joined chemically with the implant body (11) and has an internal screw thread (141), **characterised in that** the material layer (14) consists of a precious metal which is joined to the ceramic material via a vitreous layer by means of the Low-Temperature Cofire Process, thereby forming a Low-Temperature Cofired Ceramic (LTCC).

2. Implant according to claim 1, **characterised in that** the implant body (11) has a coating (17) of metal or plastic on at least part of its side facing the abutment (2).

3. Ceramic screw, in particular a zirconium screw, comprising a screw head (31) with a threaded stem (33) moulded onto it, where the threaded stem has, at least in certain parts, a coating (34) of metal, which is joined chemically to the screw and in which a thread (341) is made, **characterised in that** the layer of material (34) consists of a precious metal which is joined to the ceramic material via a vitreous layer by means of the Low-Temperature Cofire Process, thereby forming a Low-Temperature Cofired Ceramic (LTCC).

4. Two-part implant system, comprising an implant (1) according to one of the claims 1 and 2, and an abutment (2) which is joined to the implant (1) by means of a screw (3).

5. Implant system according to claim 4, **characterised in that** the abutment (2) is made of ceramic material.

6. Implant system according to claim 5, **characterised in that** the screw (3) is formed according to claim 3.

7. Implant system according to any of the claims 4 to 6, **characterised in that** the implant body (11) has a coating (17) of metal or plastic around its side facing the abutment (2), and that the abutment (2) has a ridge around its side facing the implant body (11), in such a way that, when the screw is tightened, the ridge penetrates the coating (17), thereby forming a seal.

8. Implant system according to claim 7, **characterised in that** the abutment (2) has an inside taper (241) on its side facing the implant body, which is formed in such a way that the coating (17) around the implant body (11) is not visible when the implant system is in place.

9. Process for manufacturing a ceramic implant, where an implant body (11) is formed as a green body of ceramic material and is provided with a blind hole (13), where the blind hole (13) is filled with a metal, and **characterised in that** the ceramic material is fired jointly with the metal inside it by means of a Low-Temperature Cofire Process and that following the firing operation a threaded hole (141, 142) is made in the metal plug located in the bore (13).

## Revendications

1. Implant en céramique, en particulier implant en zircone, à insérer dans un os maxiliaire, comprenant un corps implantaire (11) avec un alésage borgne (13) destiné à recevoir une vis (3) servant à immobiliser un pilier (2), sachant qu'à l'intérieur de l'alésage (13) est agencée au moins partiellement une couche de matériau (14) en métal, qui est liée chimiquement avec le corps implantaire (11) et dotée d'un taraudage (141), **caractérisé en ce que** la couche de matière (14) se compose d'un métal précieux qui est relié à la céramique via le procédé Low-Temperature-Cofired Ceramic (LTCC) et une couche de liaison vitreuse, de sorte à former une Low-Temperature-Cofired Ceramic (LTCC).

2. Implant selon la revendication 1, **caractérisé en ce que** le corps implantaire (11) présente, sur son côté regardant le pilier (2), au moins en partie un revêtement (17) en métal ou en matière plastique.

3. Vis céramique, en particulier vis en zircone, comprenant une tête (31) de vis avec une tige filetée (33) modelée contre elle, sachant que la tige filetée comporte au moins localement un revêtement (34) en métal, revêtement qui est lié chimiquement à la vis et dans lequel a été ménagé un taraudage (341), **caractérisé en ce que** la couche de matière (34) se compose d'un métal précieux qui est relié à la céramique via le procédé Low-Temperature-Cofired Ceramic (LTCC) et une couche de liaison vitreuse, de sorte à former une Low-Temperature-Cofired Ceramic (LTCC).

4. Système implantaire en deux parties, comprenant un implant (1) selon l'une des revendications 1 et 2, ainsi qu'un pilier (2) qui est relié à l'implant (1) au moyen d'une vis (3).

5. Système implantaire selon la revendication 4, **caractérisé en ce que** le pilier (2) est fabriqué en matériau céramique.

6. Système implantaire selon la revendication 5, **caractérisé en ce que** la vis (3) est configurée conformément à la revendication 3.

7. Système implantaire selon l'une des revendications 4 à 6, **caractérisé en ce que** le corps implantaire (11) comporte périphériquement, sur son côté regardant le pilier (2), un revêtement (17) en métal ou en plastique, et **en ce que** le pilier (2) comporte, sur son côté regardant le corps implantaire (11), une nervure périphérique telle qu'au moment de serrer la vis la nervure pénètre dans le revêtement (17), ce qui permet de parvenir à une étanchéisation.

8. Système implantaire selon la revendication 7, **caractérisé en ce que** le pilier (2) comporte, sur son côté regardant le corps implantaire, un cône intérieur (241) configuré de telle sorte que le revêtement périphérique (17) du corps implantaire (11) n'est pas visible lorsque le système implantaire se trouve à l'état monté.

9. Procédé de fabrication d'un implant en céramique, sachant qu'un corps implantaire (11) officiant de corps de base est formé à partir d'un matériau céramique et doté d'un alésage borgne (13), sachant que l'alésage borgne (13) est rempli d'un métal, et **caractérisé en ce que** la céramique est cuite avec le métal introduit dans le cadre d'un procédé Low-Temperature-Cofire, et qu'après la séquence de cuisson un alésage taraudé (141, 142) est ménagé dans les bouchons métalliques situés dans l'alésage (13).
